(19) **Europäisches Patentamt / European Patent Office / Office européen des brevets**

(11) **EP 1 783 687 A1**

(12) **EUROPEAN PATENT APPLICATION**

(43) Date of publication:
**09.05.2007 Bulletin 2007/19**

(51) Int Cl.:
***G06T 7/20*** (2006.01)

(21) Application number: **06123430.8**

(22) Date of filing: **03.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **04.11.2005 JP 2005320602**

(71) Applicant: **Aisin AW Co., Ltd.**
**Fujii-cho**
**Anjo**
**Aichi 444-1192 (JP)**

(72) Inventors:
• **Mori, Toshihiro**
**Okazaki**
**Aichi 444-8564 (JP)**

• **Kubota, Tomoki**
**Okazaki**
**Aichi 444-8564 (JP)**
• **Sugiura, Hiroaki**
**Okazaki**
**Aichi 444-8564 (JP)**
• **Miyazaki, Hideto**
**Okazaki**
**Aichi 444-8564 (JP)**

(74) Representative: **TBK-Patent**
**Bavariaring 4-6**
**80336 München (DE)**

(54) **Movement amount computation system**

(57)     To compute, with a comparatively small processing load, a movement amount or a movement distance when a camera is mounted on a moving body such as an automobile or the like and moves freely, a movement amount computation system extracts matching inspection areas of a prescribed shape and size from frames captured by the camera, executes pattern matching between the frames, calculates positions of subject points that correspond to identical characteristic points in each frame, determines a displacement amount between the two calculated subject point positions, and uses the displacement amount as a movement amount between the frames. The movement amount computation system includes a steering angle detection unit that detects a steering angle of the moving body on which the camera is mounted.

FIG. 1

**Description**

1. Field of the Invention

The present invention relates to a movement amount computation system that determines a movement amount or a movement distance of a moving body such as an automobile or the like, based on pattern matching between two temporally sequential frames.

2. Description of the Related Art

The determining of a vehicle position or the like based on a movement amount of corresponding image points in two temporally sequential images taken by a CCD camera that faces forward and is fixed to an automobile and the providing of the vehicle position for vehicle control and display control are described in Japanese Patent Application Publication No. JP-A-6-020052.

In the same publication, simplification of computation of image point positions by limiting the object of observation in image processing to a portion of an image is also described.

Japanese Patent Application Publication No. JP-A-6-020052 does not describe the various problems that occur when an automobile on which a camera is mounted travels such as to describe a curved line, nor does it describe any methods of solving the problems.

It is an object of the present invention to be able to compute with good precision a movement amount (a length of a movement path) or a movement distance (a length of a straight line connecting two points) when the camera is mounted on a moving body such as an automobile or the like and moves freely, that is, when the camera moves with its direction of travel changing freely.

For example, when the camera is mounted on an automobile or the like and moves, the direction of travel of the automobile can change freely, so it cannot be expected that identical characteristic points in two different frames will necessarily line up in the vertical direction on a screen. Therefore, searching in the screen must be done not only in the vertical direction, but in all directions, and that sort of searching tends to increase the processing load.

According to the present invention it is desired to be able to compute the movement amount or movement distance with a comparatively small processing load when the direction of travel (that is, the direction of image capture) can change freely as the automobile moves.

Also, when the camera is mounted on an automobile or the like and moves, the direction of travel of the automobile can change freely, so it cannot be expected that the movement path will necessarily be a straight line. Therefore, when the movement amount is approximated as a straight line, cases occur where high precision cannot necessarily be obtained.

According to the present invention it is further desired to be able to compute the movement amount with sufficiently good precision when the direction of travel can change freely as the automobile moves.

Also, when the camera is mounted on an automobile or the like and moves, the direction of travel of the automobile can change freely, so in order to determine the movement amount of the automobile based on the movement amount of an image point, as in Japanese Patent Application Publication No. JP-A-6-020052, the computation result for the movement amount of an image point must be corrected, taking into account a wide variety of factors, such as lens system deflection and the like. However, this sort of correction leads to a noticeable increase in the processing load.

According to the present invention it is still further desired to be able to compute the movement amount or the movement distance with good precision, even if the distance per pixel is not corrected.

According to a first aspect (Configuration 1), there is provided a movement amount computation system that extracts matching inspection areas of a prescribed shape and size from frames captured by a camera, executes pattern matching between the frames, calculates positions in relation to the camera of subject points that correspond to identical characteristic points in each frame, determines a displacement amount between the two calculated subject point positions, and uses the displacement amount as a movement amount between the frames. The first aspect includes a steering angle detection unit that detects a steering angle of a moving body on which the camera is mounted. In the first aspect, there is provided an inspection area extraction portion, which extracts the matching inspection areas, tilts the matching inspection area of a second frame, which follows a first frame, in relation to the matching inspection area in the first frame, according to the steering angle detected by the steering angle detection unit, then extracts the matching inspection area of the second frame. A displacement computation portion, which determines the displacement amount between the two subject point positions, uses the determined displacement amount as the movement amount of the moving body on which the camera is mounted. Because the first aspect concerns about a movement amount computation system as described above, in the comparison of the matching inspection area from the first frame and the matching inspection area from the second frame, identical characteristic points are lined up in the vertical direction in the matching inspection areas. Therefore, the movement amount or movement distance of the moving body on which the camera is mounted can be computed with a comparatively small processing load. Also, because the displacement amount between the two subject point positions (the displacement amount in road surface coordinates), not the number of pixels between the two characteristic points on the screen (the displacement amount on the screen), is used as the movement amount between the two frames, it is not necessary to correct the distance per pixel.

According to the first aspect, the displacement amount between the two subject point positions may be the length of a straight line that connects the two subject point positions or the length of a movement path that connects the two subject point positions. The length of the movement path may be a length that is approximated by a circular arc or the like using a prescribed technique.

As a rule, the second frame, which follows the first frame, is the frame immediately following the first frame, but if a control is used that skips over the immediately following frame when matching between the first frame and the immediately following frame fails, the frame immediately following the immediately following frame becomes the second frame. The same applies when matching between the first frame and the frame immediately following the immediately following frame fails.

According to a second aspect (Configuration 2), there is provided a movement amount computation system that executes pattern matching between frames captured by a camera, calculates positions in relation to the camera of subject points that correspond to identical characteristic points in each frame, determines a displacement amount between the two calculated subject point positions, and uses the displacement amount as a movement amount between the frames. The second aspect includes a steering angle detection unit that detects a steering angle of a moving body on which the camera is mounted. According to the second aspect, a displacement computation portion, which determines the displacement amount between the two subject point positions, calculates the length of a turning path of the moving body, on which the camera is mounted, between the two subject point positions, according to the steering angle detected by the steering angle detection unit, uses the length of the turning path as the displacement amount between the two subject point positions, and uses the determined displacement amount as the movement amount of the moving body. Because the second aspect concerns about a movement amount computation system as described above, the movement amount of the moving body on which the camera is mounted can be calculated with good precision along a movement path. Also, because the displacement amount between the two subject point positions (the displacement amount in road surface coordinates), not the number of pixels between the two characteristic points on the screen (the displacement amount on the screen), is used as the movement amount between the two frames, it is not necessary to correct the distance per pixel.

A third aspect (Configuration 3) possesses the essential features of the first aspect and the second aspect, so it provides the effects of both the first and the second aspect.

FIG. 1A is a block diagram showing signal inputs and outputs for a car navigation system equipped with a function of a movement amount computation system.

FIG. 1B is an explanatory drawing showing a relationship between an image range photographed by an on-board camera and an image capture range on a road surface.

FIG. 2 is a flowchart showing an outline of processing that implements a movement amount computation function in the car navigation system in FIG. 1A.

FIG. 3 is an explanatory drawing showing how a matching inspection area is extracted from a frame and how pattern matching is done using data in the matching inspection area.

FIG. 4 is an explanatory drawing showing a technique for determining a movement amount by approximating the movement as a circular arc that follows a movement path that takes a vehicle's turning into consideration.

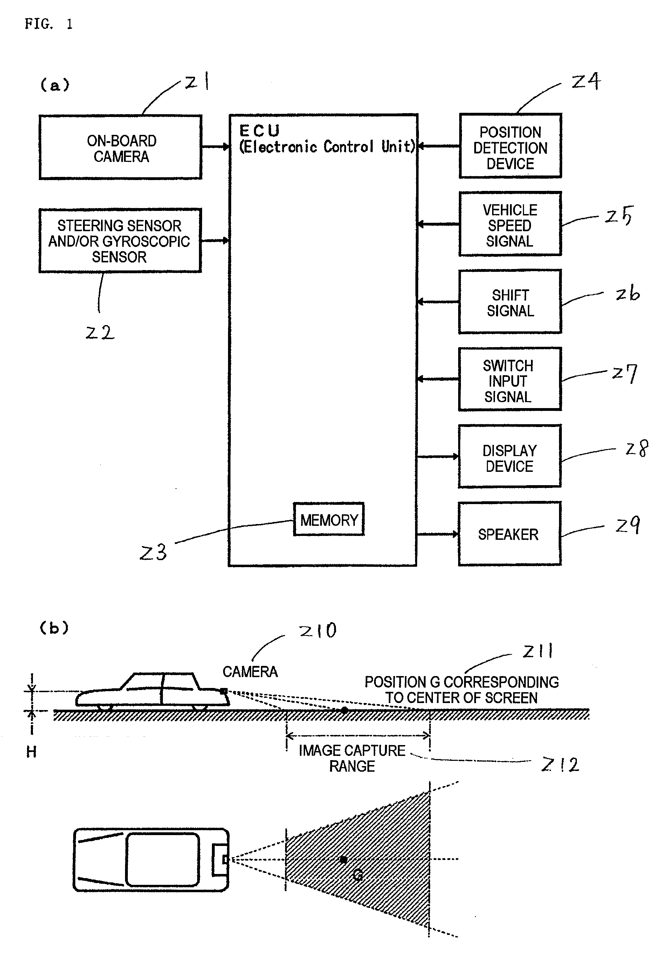

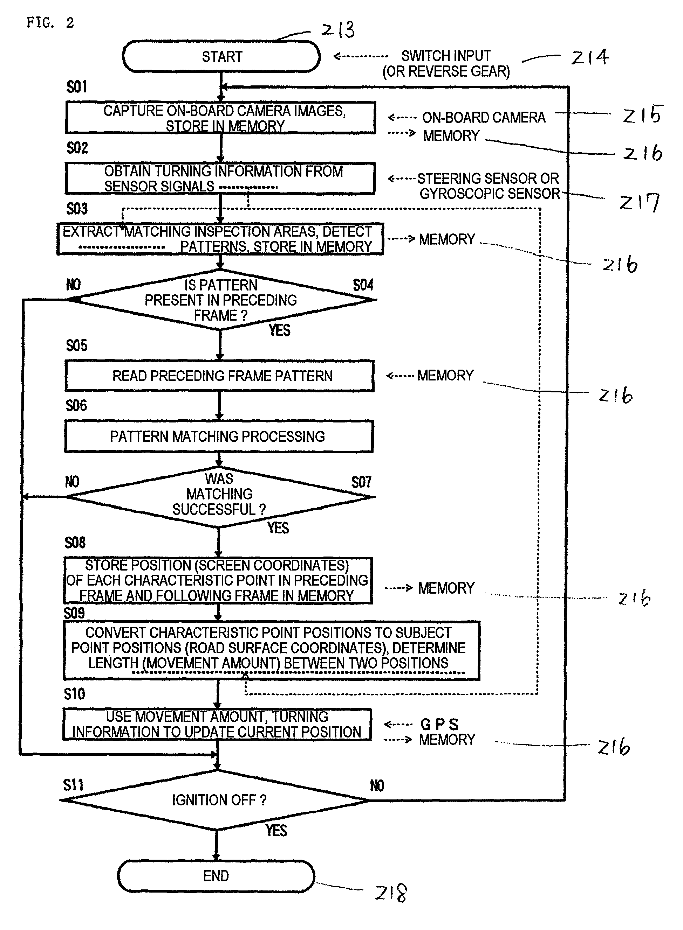

FIG. 1A is a block diagram showing signal inputs and outputs for a car navigation system equipped with a function of a movement amount computation system. FIG. 2 is a flowchart showing an outline of processing that executes a movement amount computation function in the car navigation system in FIG. 1A.

As shown in FIG. 1A, the movement amount computation system is installed as a part of the publicly known car navigation system. That is, the movement amount computation system is installed in the form of a processing program that executes procedures that are described below and hardware such as an on-board camera and the like.

In the car navigation system, as shown in the drawing, signals are input into a publicly known electronic control unit (ECU) from a variety of devices, such as an on-board camera (mounted on the rear of the vehicle in the example in FIG. 1B), a steering sensor that detects a steering angle (or a gyroscopic sensor that detects tilt), a Global Positioning System (GPS) position detection device, and the like. A vehicle speed signal that is obtained based on a revolution speed of a wheel, a shift signal that indicates various gear positions, such as reverse gear, drive gear, and the like, as well as signals from various types of switches, such as a movement amount computation system on-off switch, are also input. The input signals are processed according to programs that correspond to designated functions, and the various designated functions are executed. For example, where the movement amount computation function is designated, a program to execute the movement amount computation function is read from a ROM (not shown) and executed, thereby executing the movement amount computation function.

Appropriate data are output from the ECU to the car navigation system display device or speaker, and appropriate displays or audio are output.

Processing that executes the movement amount computation function (SO 1 to S10) is started according to a setting in effect when the system was shipped or the like, for example, an input from a switch that turns the movement amount computation function on or in response to the transmission being shifted into reverse gear. Also, processing ends upon an input from a switch that turns the movement amount computation function off or in response to the transmission being shifted from reverse gear to another gear. Note that a setting may also be made to end processing in response to an ignition switch being turned off (YES at S11, for reference).

A procedure that executes the movement amount computation function according to the flowchart in FIG. 2 will be explained below.

First, at S01, images are captured by the on-board camera and stored in a prescribed area in memory (an area for frame memory).

Next, at S02, turning information is created based on a detection signal from the steering sensor (or the gyroscopic sensor) and stored in memory.

The turning information is information that provides an angle at which a matching inspection area that is to be extracted from a following frame should be tilted in relation to a matching inspection area that has been extracted from a preceding frame in order for identical characteristic points in the preceding frame and the following frame to be lined up in the vertical direction in the matching inspection areas extracted from both frames.

If the matching inspection area in the following frame is demarcated such that the identical characteristic points in the two frames are lined up in the vertical direction in the matching inspection areas extracted from both frames, the pattern matching processing load can be significantly reduced.

Also, if the matching inspection area in the following frame is demarcated as described above, the length of time that a given characteristic point remains within the matching inspection area can be increased, so it becomes possible to track the given characteristic point over a comparatively long period of time, reducing the possibility of a matching failure. Generally in the case of a matching failure, matching is done between a preceding frame and a following frame, skipping over the current frame, or the preceding frame is abandoned and matching is done between the current frame and the following frame, but in both cases, a frame exists that cannot be included in the matching process, causing a decrease in accuracy. Tilting the matching inspection area as described above and then extracting it decreases the possibility of a decrease in accuracy due to a cause such as this.

The turning information can be, for example, the difference between the steering angle of the front wheels when the preceding frame is captured and the steering angle of the front wheels when the following frame is captured. In this case, the steering angle datum is set to zero degrees when the vehicle is moving straight forward. The average of the front-wheel steering angle when the preceding frame is captured and the front-wheel steering angle when the following frame is captured can also be used. Note that an automobile does not turn at the same angle as the steering angle, but rather turns around a prescribed position (an axis of rotation) that is in a prescribed relationship to the steering angle. Therefore, more accurate turning information can be obtained by factoring this requirement in and correcting for it.

Note:
The preceding frame corresponds to a first frame in Configuration 1 and Configuration 3, and the following frame corresponds to a second frame in Configuration 1 and Configuration 3.

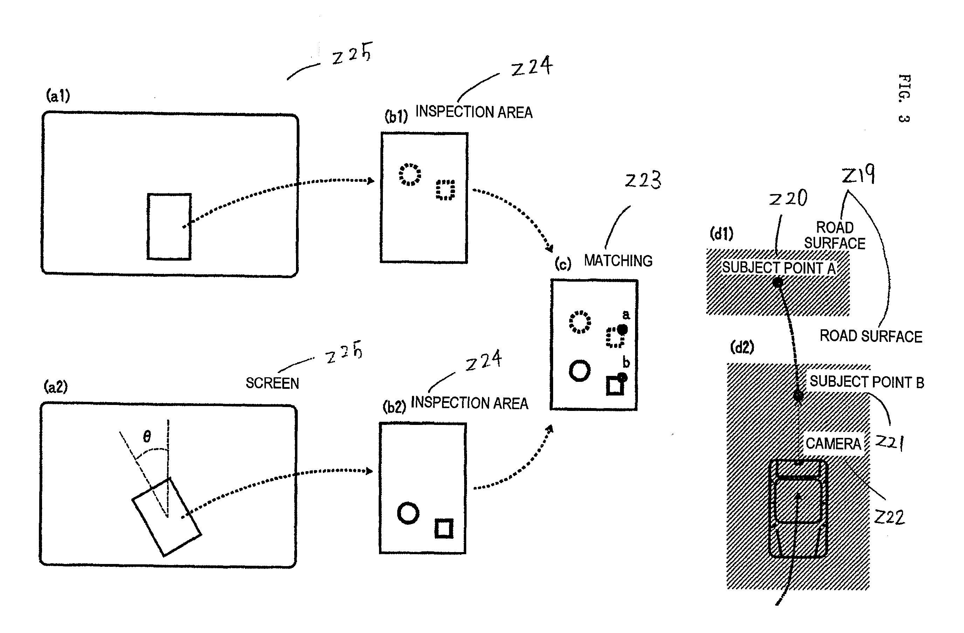

Next, at S03, using the turning information obtained at step S02 above, the system extracts matching inspection areas from the images stored in frame memory at step S01. That is, the system extracts a matching inspection area from the following frame by tilting the area in relation to the preceding frame by an angle θ that is provided by the turning information. This process is shown in (a2) to (b2) in FIG. 3. As shown in the drawing, the matching inspection area in the current frame (the rectangular area in (a2) in FIG. 3) is tilted in relation to the matching inspection area in the preceding frame (the rectangular area in (a1) in FIG. 3) by the angle θ and extracted.

Also at S03, a pattern to be used for pattern matching is detected in the extracted matching inspection area by executing prescribed image processing (Fourier transforms, binarization processing, edge processing, and the like), and the pattern is then stored in memory. This processing is common knowledge, so the explanation will be omitted.

Note:
The preceding frame corresponds to the first frame in Configuration 1 and Configuration 3, and the current frame corresponds to the second frame in Configuration 1 and Configuration 3.

At step S04, the system checks whether or not a pattern is present in the preceding frame.

If a pattern is present in the preceding frame (if YES at S04), the system reads the pattern in the preceding frame from memory (at S05) and executes pattern matching with the pattern in the current frame (at S06). The pattern matching processing (at S06) is processing that searches for matching patterns (the circle and square shapes in (b1), (b2), and (c) in FIG. 3) by comparing the matching inspection area from the preceding frame with the matching inspection area from the following frame, but this processing is common knowledge, so the explanation will be omitted.

At step S07, the system checks whether or not matching has succeeded.

If matching has succeeded (YES at S07), the system determines the characteristic points that match in the preceding frame and the following frame (point a and point b in (c) in FIG. 3) and stores their coordinates in memory at S08. The processing that determines the corresponding characteristic points between frames is common knowledge, so the explanation will be omitted.

Next, at S09, the system converts the coordinate values (the screen coordinate values) of each characteristic point in the preceding frame and the following frame to the corresponding coordinate values on the road surface (subject point positions). If the mounting height H and the mounting angle of the camera are determined, as in FIG. 1B, the field angle of the camera is determined in advance, so if other factors such as lens system deflection and the like are taken into account, the correspondences between the coordinates of each position on the screen and positions on the road surface can be uniquely identified. In FIG. 1B, G is the position on the road surface that corresponds to the center of the screen.

Once the coordinate values (the screen coordinate values) of each characteristic point are converted to coordinate values on the road surface (subject point positions, as seen from the on-board camera), the system then determines the amount of displacement (movement amount) between the two subject point positions. If the time gap between the two frames is sufficiently short, the movement amount can be approximated by the distance between the two subject point positions (the length of a straight line connecting the two subject point positions). Note that, as described above, an automobile does not instantly turn at the same angle as the steering angle, but rather turns around a prescribed position (an axis of rotation) that is in a prescribed relationship to the steering angle. Therefore, if a movement amount is determined that follows the track of the turn, a more accurate movement amount can be obtained.

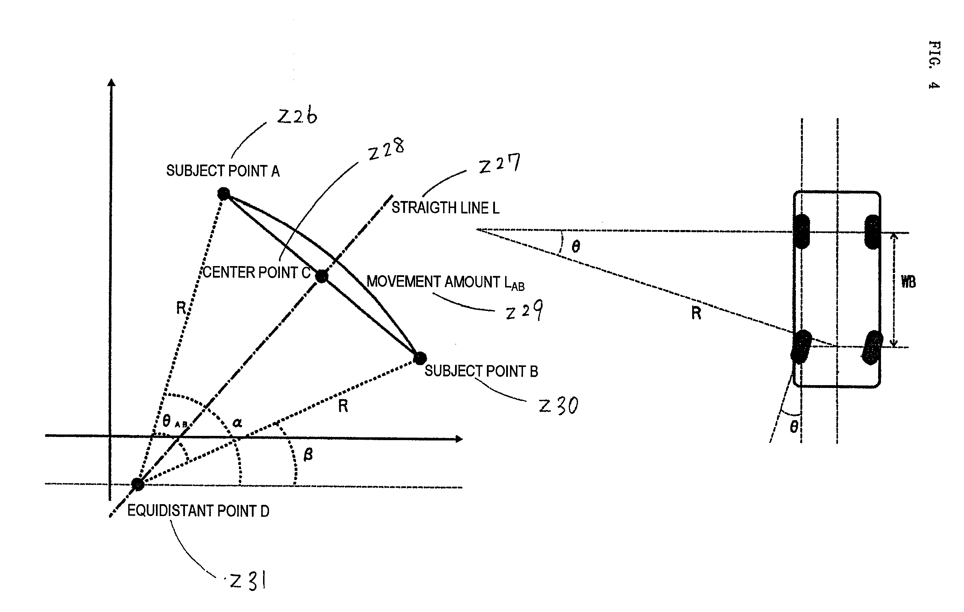

The technique for determining an approximate movement amount that follows the path of the turn will be explained. That is, the technique for determining the movement amount $L_{AB}$ in FIG. 4, based on turning information obtained at step S02, will be explained.

First, a center point C on a line segment AB that connects subject points A and B is determined.
If A $(X_1, Y_1)$, B $(X_2, Y_2)$, C $(X_3, Y_3)$,
the coordinates of C are expressed as $X_3 = (X_1 + X_2) / 2$, $Y_3 = (Y_1 + Y_2) / 2$

Next, a straight line L is determined that intersects the line segment AB at point C. The slope a of the line segment AB is as follows:

$$a = (Y_2 - Y_1) / (X_2 - X_1)$$

The straight line L is expressed as y = (-1 / a) * x + b. Because the line passes through point C $(X_3, Y_3)$, the intercept b is known.

Based on the steering angle values at point A and point B, the respective front wheel steering angles $\theta_1$ and $\theta_2$ are determined. Here, the front wheel steering angles $\theta_1$ and $\theta_2$ can be determined based on the turning characteristics of the vehicle.

The front wheel steering angle θ during the approximated movement is determined using the front wheel steering angles $\theta_1$ and $\theta_2$. For example, if the average value is determined, $\theta = (\theta_1 + \theta_2) / 2$.

Next, the turning radius R is determined based on θ. If the vehicle wheel base is WB, the radius is determined as R = WB * tan (90 - θ).

Next, the system determines point D $(X_0, Y_0)$, a point on the straight line L for which the distance from points A and B is equal to R.

The slope a and the intercept b are already known in the equation for the straight line L described above, so D is known.

Next, the system determines straight line AD and straight line BD, then determines the angles α and β that the straight lines AD and BD respectively form with the X axis (although the Y axis may also be used). When the straight lines AD and BD are respectively expressed as y = c * x + d and y = e * x + f, then $\alpha = \tan^{-1}$ (c) and $\beta = \tan^{-1}$ (e).

Based on α and β, the angle $\theta_{AB}$ formed by the two straight lines AD and BD is expressed as $\theta_{AB} = \alpha - \beta$.

Based on $\theta_{AB}$ and the turning radius R, the approximate movement amount $L_{AB}$ between points A and B is expressed as $L_{AB} = R * \theta_{AB}$.

Note that the unit for $\theta_{AB}$ is the rad. In the equations above, the asterisk (*) signifies multiplication.

If the movement amount between the two subject points A and B is determined approximately in this manner, or if the movement amount between the two subject points A and B is determined more precisely by calculating the length of a path that follows the approximately circular arc in FIG. 4, the movement amount (in the case of a straight line approximation, a movement distance), and a movement velocity that is calculated based on the movement amount, are updated at S10. Note that where the current or preceding frame is skipped due to a matching failure, the movement velocity is calculated by taking into account the time that corresponds to the number of skipped frames. The values (movement amount, movement velocity) that are updated in this manner at S10 serve as data that are used for a variety of functions by the car navigation system.

Next, the program returns to step S01 and repeatedly executes the processing described above until the processing is ended (until the result at S11 is YES).

To compute, with a comparatively small processing load, a movement amount or a movement distance when a camera is mounted on a moving body such as an automobile or the like and moves freely, a movement amount computation system extracts matching inspection areas of a prescribed shape and size from frames captured by the camera, executes pattern matching between the frames, calculates positions of subject points that correspond to identical characteristic points in each frame, determines a displacement amount between the two calculated subject point positions, and uses the displacement amount as a movement amount between the frames. The movement amount computation system includes a steering angle detection unit that detects a steering angle of the moving body on which the camera is mounted. An inspection area extraction portion, which extracts the matching inspection areas, tilts the matching inspection area of a second frame, which follows a first frame, in relation to the matching inspection area in the first frame, according to the steering angle detected by the steering angle detection unit, then extracts the matching inspection area of the second frame. A portion that determines the displacement amount between the two subject point positions uses the determined displacement amount as the movement amount of the moving body.

ing angle detection unit, uses the length of the turning path as the displacement amount between the two subject point positions, and uses the determined displacement amount as the movement amount of the moving body.

**Claims**

1. A movement amount computation system that extracts matching inspection areas of a prescribed shape and size from frames captured by a camera (Z1), executes pattern matching between the frames, calculates positions in relation to the camera of subject points that correspond to identical characteristic points in each frame, determines a displacement amount between the two calculated subject point positions, and uses the displacement amount as a movement amount between the frames, comprising:

   a steering angle detection unit (Z5) that detects a steering angle of a moving body on which the camera is mounted, wherein
   an inspection area extraction portion, which extracts the matching inspection areas, tilts the matching inspection area of a second frame, which follows a first frame, in relation to the matching inspection area in the first frame, according to the steering angle detected by the steering angle detection unit, then extracts the matching inspection area of the second frame; and
   a displacement computation portion, which determines the displacement amount between the two subject point positions, uses the determined displacement amount as the movement amount of the moving body on which the camera is mounted.

2. The movement amount computation system according to claim 1, wherein
   the displacement computation portion, which determines the displacement amount between the two subject point positions, calculates the length of a turning path of the moving body, on which the camera is mounted, between the two subject point positions, according to the steering angle detected by the steer-

FIG. 1

(a)

```
ON-BOARD
CAMERA                          z1

STEERING SENSOR
AND/OR GYROSCOPIC
SENSOR                          z2
```

ECU
(Electronic Control Unit)

MEMORY          z3

```
POSITION
DETECTION       z4
DEVICE

VEHICLE
SPEED           z5
SIGNAL

SHIFT
SIGNAL          z6

SWITCH
INPUT           z7
SIGNAL

DISPLAY
DEVICE          z8

SPEAKER         z9
```

(b)

z10
CAMERA

z11
POSITION G CORRESPONDING
TO CENTER OF SCREEN

H

IMAGE CAPTURE
RANGE            z12

G

FIG. 2

START — *213*

← — — — — SWITCH INPUT (OR REVERSE GEAR) — *214*

**S01** CAPTURE ON-BOARD CAMERA IMAGES, STORE IN MEMORY

← — — ON-BOARD CAMERA — *215*
— — ⟶ MEMORY — *216*

**S02** OBTAIN TURNING INFORMATION FROM SENSOR SIGNALS

← — — STEERING SENSOR OR GYROSCOPIC SENSOR — *217*

**S03** EXTRACT MATCHING INSPECTION AREAS, DETECT PATTERNS, STORE IN MEMORY

— — ⟶ MEMORY — *216*

**S04** IS PATTERN PRESENT IN PRECEDING FRAME ?
NO / YES

**S05** READ PRECEDING FRAME PATTERN

← — — — MEMORY — *216*

**S06** PATTERN MATCHING PROCESSING

**S07** WAS MATCHING SUCCESSFUL ?
NO / YES

**S08** STORE POSITION (SCREEN COORDINATES) OF EACH CHARACTERISTIC POINT IN PRECEDING FRAME AND FOLLOWING FRAME IN MEMORY

— — ⟶ MEMORY — *216*

**S09** CONVERT CHARACTERISTIC POINT POSITIONS TO SUBJECT POINT POSITIONS (ROAD SURFACE COORDINATES), DETERMINE LENGTH (MOVEMENT AMOUNT) BETWEEN TWO POSITIONS

**S10** USE MOVEMENT AMOUNT, TURNING INFORMATION TO UPDATE CURRENT POSITION

← — — G P S
— — ⟶ MEMORY — *216*

**S11** IGNITION OFF ?
NO / YES

END — *218*

FIG. 3

FIG. 4

European Patent
Office

**EUROPEAN SEARCH REPORT**

Application Number

EP 06 12 3430

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 288 072 A2 (AISIN SEIKI [JP]) 5 March 2003 (2003-03-05) * abstract * * paragraphs [0006], [0009] - [0012], [0018] - [0022] * * figures 1,2 * | 1,2 | INV. G06T7/20 |
| X | US 6 466 684 B1 (SASAKI KAZUYUKI [JP] ET AL) 15 October 2002 (2002-10-15) * column 1, lines 6-13 * * column 4, line 11 - column 5, line 30 * * column 7, lines 34-58 * * column 13, line 38 - column 15, line 57 * | 1 | |
| X | DINESH NAIR ET AL: "Moving Obstacle Detection From a Navigating Robot" IEEE TRANSACTIONS ON ROBOTICS AND AUTOMATION, IEEE INC, NEW YORK, US, vol. 14, no. 3, June 1998 (1998-06), XP011053299 ISSN: 1042-296X * section "I. Introduction", "II. B. Robot Orientation", "II. C. Subtracting Angular Movements of the Robot From an Image", "IV. Relative Motion of Obstacles" * * abstract * | 1 | TECHNICAL FIELDS SEARCHED (IPC) G06T G01C |

The present search report has been drawn up for all claims

| Place of search | Date of completion of the search | Examiner |
|---|---|---|
| Munich | 17 January 2007 | Eckert, Lars |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 783 687 A1**

## ANNEX TO THE EUROPEAN SEARCH REPORT
## ON EUROPEAN PATENT APPLICATION NO.

EP 06 12 3430

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2007

| Patent document cited in search report | | Publication date | Patent family member(s) | | Publication date |
|---|---|---|---|---|---|
| EP 1288072 | A2 | 05-03-2003 | JP<br>US | 2003063340 A<br>2003060972 A1 | 05-03-2003<br>27-03-2003 |
| US 6466684 | B1 | 15-10-2002 | JP<br>JP | 3580475 B2<br>2000090243 A | 20-10-2004<br>31-03-2000 |

EPO FORM P0459

**EP 1 783 687 A1**

## REFERENCES CITED IN THE DESCRIPTION

**Patent documents cited in the description**

- JP 6020052 A